Europäisches Patentamt

**European Patent Office**

Office européen des brevets

(19)

(11) Publication number: **0 304 489**

**A1**

(12) **EUROPEAN PATENT APPLICATION**

published in accordance with Art. 158(3) EPC

(21) Application number: **88900086.5**

(22) Date of filing: **09.12.87**

Data of the international application taken as a basis:

(86) International application number:
**PCT/JP87/00955**

(87) International publication number:
**WO88/06658 (07.09.88 88/20)**

(51) Int. Cl.³: **D 21 H 1/28**
**D 21 H 1/34**

(30) Priority: **03.03.87 JP 46727/87**

(43) Date of publication of application:
**01.03.89 Bulletin 89/9**

(84) Designated Contracting States:
**DE FR GB**

(71) Applicant: **JAPAN SYNTHETIC RUBBER CO., LTD.**
**11-24, Tsukiji-2-chome Chuo-ku**
**Tokyo 104(JP)**

(72) Inventor: **SASAGAWA, Yasuhiko**
**Japan Synthetic Rubber Co., Ltd. 11-24, Tsukiji**
**2-chome Chuo-ku, Tokyo 104(JP)**

(72) Inventor: **HIGUCHI, Atsushi**
**1-2-104, Morigayamacho**
**Yokkaichi-shi, Mie 510(JP)**

(72) Inventor: **SHINGAE, Shigeru**
**3-10-16, Mitakidai**
**Yokkaichi-shi, Mie 510(JP)**

(72) Inventor: **HAMAGUCHI, Chisato**
**Syaruman Makuhari 3-1204 417-249, Makuharicho**
**5-chome Chiba-shi, Chiba 281(JP)**

(72) Inventor: **HIRAHARU, Teruo**
**1-4-201, Morigayamacho**
**Yokkaichi-shi, Mie 510(JP)**

(74) Representative: **Clifford, Frederick Alan et al,**
**MARKS & CLERK 57/60 Lincoln's Inn Fields**
**London WC2A 3LS(GB)**

(54) **PAPER COATING COMPOSITION.**

(57) A paper coating composition particularly suited for producing paper board and gate roll-coated paper, which contains as a binder a copolymer latex comprising aliphatic conjugated diene, aromatic vinyl, and vinylic amide monomers and ethylenically unsaturated carboxylic acid as essential components and being prepared by conducting emulsion polymerization of 5 to 40 wt.% of monomers suitably selected from among the monomers excluding the vinylic amide monomer so as to obtain a copolymer with a glass transition point of up to 50°C, followed by the emulsion polymerization of the rest of the monomers. This composition shows such an excellent mechanical stability in gate roll coating that it enables high-speed coating. In addition, it is excellent in dry picking resistance and printing gloss. When used in board coating, it enables an increase in the concentration of solids, and is also excellent in blister resistance, dry picking resistance, white paper gloss, and printing gloss.

EP 0 304 489 A1

C304489

- 1 -

SPECIFICATION

PAPER COATING COMPOSITION

Technical Field

The present invention relates to a paper coating composition and more particularly to a coating composition for cardboard which exhibits excellent coating workability in production of coated paper by high solid paper coating and further is excellent in adhesion strength, printing gloss, and performance such as gluability, blister pack and so forth. In addition, the paper coating composition of the present invention can be used effectively as a paper coating composition for gate roll coating which is excellent in workability.

Background Art

Many improvements have heretofore been made to a styrene/butadiene copolymer latex as a pigment binder for paper or cardboard in respect of compatibility with inorganic pigments, mutual solubility with casein, starch and so forth, workability at the stage of coating, and physical properties such as gloss, light fastness, ink receptivity, dry pick resistance of coated paper, and the present carboxylated styrene/butadiene-based rubber latex has been developed and generally used.

In recent years, increasing the solids content of a color has been made for the purpose of cost reduction due

-2-

to saving of drying energy at the time of coating. In this increasing the solids content, as the viscosity of a composition for paper coating (color) increases and fluidity is reduced, there arises the problem that workability is reduced. As a countermeasure for this, from a viewpoint of pigment, a method in which the proportion of fine particles of heavy calcium carbonate having good fluidity to be used is increased, and from a viewpoint of binder, a method in which the amount of a natural water-soluble binder, such as casein, starch and the like, having a great thickening action is decreased and a latex is made rich have been generally employed (see, for example, TAPPI Coating Conference '79). However, as the viscosity of a coating composition for cardboard is liable to increase, a coating composition for cardboard which is excellent in workability and is of high concentration cannot be obtained by the methods as described above.

Moreover, with a recent rapid increase of printed matter, a trend of high-speed printing particularly in offset printing has become increasingly marked, and the following properties have been required for a pigment-coated paper for offset coating and a pigment binder. One is a property which withstands a mechanical force applied to the surface of a pigment-coated paper at the time of printing, preventing the falling off of pigment and the peeling of a coating layer from a base paper and permitting beautiful printing. For this, it is necessary for pigments to be firmly bonded and also for a pigment-coated layer and a base paper as a substrate to be firmly bonded. As the printing speed is more increased and also the number of repeating of coating is more increased, the breakage of the paper surface becomes more vigorous, and a pigment-coated paper which can withstand them is needed. For this, a pigment binder having excellent adhesion strength is needed.

Furthermore, since cardboard is used for wrapping, post working performance such as blister pack suitability (adhesion properties between cardboard and a plastic film or sheet in the package of an article sandwiched between the carbdoard and the plastic film or sheet), gluability (gluability between paper and paper) and so forth is required therefor. However, the conventional carboxylated styrene/butadiene-based rubber latexes have not been sufficiently satisfactory in these respects.

Furthermore, in recent years, in response to the demand of increasing the quality of various magazines, wrapping paper, printed paper for propaganda, and so forth, light weight coated paper or ultra light weight coated paper, the coated amount of which is small as compared with the conventional coated papers has been rapidly spreading. As this light weight coating or ultra light weight coating method, a gate roll coating method is employed. As the advantages of the gate roll coating, (1) simultaneous coating on both sides of paper is possible, (2) high-speed coating of a high concentration coating solution is possible, (3) drying energy can be reduced, (4) the permeation of a coating solution in the inside of a base stock is limited, the yield on the paper surface is high and thus there can be obtained a coated paper which is of high opacity and is excellent in smoothness and so forth can be given.

However, when a coating composition in which the conventional generally used copolymer latex is used as a pigment binder is used in gate roll coating, since a high shearing force is applied to the coating composition between an inner gate roll and an outer gate roll, or between an applicator roll and an inner gate roll, the gum up phenomenon sometimes occurs, damaging the roll surface, or a coagulated material sometimes attaches to the surface of the roll, decreasing operating efficiency and the smoothness of the coating layer. Moreover, if water retention is too low, solidification and fixation between rolls occurs, seriously reducing runnability. On the other hand, a coated paper after gate roll coating is generally subjected to drum drying, and if the water retention is too high, the drum surface is contaminated and the smoothness of the surface of the coating layer decreases. If the coating layer has stickness, it attaches to the drum surface and contaminates the drum surface and, as a result, operating efficiency decreases and further the smoothness of the coating layer is decreased.

Gate roll coating permits light weight coating or ultra light weight coating, but has a problem in that if the coating layer is thin, printing gloss decreases. Accordingly, a coating composition for gate roll coating is required to have much excellent printing gloss as compared with the conventional coating compositions in blade coating. However, a coating composition using the conventional carboxylated butadiene-based rubber latex as a pigment binder, when used in gate roll coating, has not be sufficiently satisfactory in the smoothness, printing gloss, adhesion strength of the coating layer, and the operating efficiency at coating and drying stages.

0304489

-6-

Disclosure of Invention

The present invention is intended to overcome the above problems and it is an object of the present invention to provide a paper coating composition which exhibits excellent coating workability in production of coated paper by high solid coating, further has excellent adhesion strength, printing gloss, wet ink receptivity and post working performance such as gluability and blister pack, and is suitable for coating of cardboard, and which is excellent in smoothness, printing gloss and adhesion strength of a coating layer surface, is free from the gum up phenomeonon of a coating solution at the time of coating and the contamination of a drum surface at the time of drum drying, is excellent in operating efficiency, and is suitable for gate roll coating and cardboard coating.

As a result of investigations, the present inventors have found that the above object can be attained by using a specified copolymer latex as a pigment binder, and based on the findings, have completed the present invention.

That is, the present invention relates to a paper coating composition comprising a pigment and a binder, which is characterized in that, as the binder, the

-7-

following copolymer latex is used.

Copolymer Latex

(a) Aliphatic conjugated diene 20 to 60% by weight

(b) Aromatic vinyl compound 10 to 65% by weight

(c) Amide-based vinyl monomer 0.1 to 10% by weight

(d) Ethylenically unsaturated carboxylic acid 0.5 to 10% by weight

(e) Other copolymerizable compound 0 to 40% by weight

A multi-stage polymerization copolymer latex obtained by first emulsion polymerizing 5 to 40% by weight based on the total weight of the monomers used of a monomer mixture comprising at least one monomer selected from each of (a), (b), (d) and (e) above to form a copolymer having a glass transition temperature of not more than 50°C, and then, in the presence of this copolymer, emulsion polypolymerizing a monomer mixture comprising (c) and the remaining (a), (b), (d), (e) monomers.

The paper coating composition of the present invention is especially preferable for the one for cardboard as well as the one for gate roll coating.

-8-

Best Mode for Carrying Out the Invention

The present invention will hereinafter be explained in detail.

As typical examples of the aliphatic conjugated diene (Component (a)) to be used in production of the copolymer latex of the present invention, butadiene, isoprene, 2-chloro-1,3-butadiene, etc. can be given. The proportion of the component (a) used should be in the range of 20 to 60% by weight in order to impart proper elastisity and film hardness to the copolymer, and is preferably 25 to 50% by weight. Below 20% by weight, the resulting copolymer is hard and brittle, while on the other hand, above 60% by weight, the resulting copolymer becomes too soft, water resistance drops, and stickness increases and, therefore, in gate roll coating the drum contamination of a drier occurs and operating efficiency drops.

As typical examples of the aromatic vinyl compound (Component (b)), styrene, alpha($\alpha$)-methylstyrene, vinyltoluene, p-methylstyrene, etc. can be given. The proportion of the component (b) used is 10 to 65% by weight and peferably 30 to 60% by weight. Below 10% by weight, water resistance and adhesion strength of the resulting copolymer are poor, while on the other hand, in excess of

-9-

65% by weight, polymerization stability drops; in particular, gate roll coating efficiency drops.

As typical examples of the amide-based vinyl monomer (Component (c)), acrylamide, methacrylamide, N-methylol-arylamide, diacetoneacrylamide, crotonamide, itaconamide, methylitaconamide, maleic acid monoamide, methylenediacrylamide, etc. can be given. Of these, acrylamide, methacrylamide and N-methylolacrylamide are preferred.

The proportion of the component (c) used, when the composition is used as a cardboard coating composition, is 0.1 to 10% by weight and preferably 1 to 8% by weight. Below 0.1% by weight, proper viscosity cannot be obtained and the effect of improving post working performance such as blister pack suitability and gluability which are important characteristics of cardboard is not sufficient and undesirable. On the other hand, if it is in excess of 10% by weight, viscosity becomes too high and thus operating efficiency undesirably drops.

When the paper coating composition of the present invention is used in gate roll coating, as the component (c), it is preferred for the amide-based vinyl monomer to be used in the range of 0.1 to 10% by weight, preferably 0.5 to 8% by weight. If the proportion of the amide-based vinyl monomer used as the component (c) is less

-10-

than 0.1% by weight the gum up phenomenon and the contamination of the drum surface are liable to occur at the
time of gate roll coating, and operating efficiency
drops. Moreover, a composition having excellent printing
gloss cannot be obtained. On the other hand, if it is
in excess of 10% by weight, the viscosity of the paper
coating composition becomes too high and thus operating
efficiency undesirably drops.

As typical examples of the ethylenically unsaturated
carboxylic acid (Component (d)), mono- or di-carboxylic
acids such as acrylic acid, methacrylic acid, crotonic
acid, maleic acid, fumaric acid, itaconic acid, etc. can
be given. In addition, dicarboxylic anhydrides can be
used. The proportion of the component (d) used is 0.5 to
10% by weight and preferably 1 to 7% by weight. If it is
below 0.5% by weight, the adhesion strength of the
resulting copolymer drops, mechanical stability decreases
and thus operating efficiency drops. On the other hand,
if it is in excess of 10% by weight, the viscosity of the
latex becomes too high and handling becomes difficult.

As typical examples of the other copolymerizable
compound (Component (e)), ethylenically unsaturated
carboxylic acid esters, vinyl cyanide compounds, etc. can
be given. Representative examples of the ethylenically unsaturated carboxylic acid ester include alkyl acrylate and alkyl methacrylate such as methyl acrylate, methyl methacrylate, ethyl acrylate, ethyl methacrylate, butyl acrylate, butyl methacrylate, etc., and hydroxyalkyl ester such as 2-hydroxyethyl acrylate, 2-hydroxyethyl methacrylate, etc., and representative examples of the vinyl cyanide compound include acrylonitrile, methacrylonitrile, etc. Of these, methyl methacrylate and acrylonitrile are preferably used. The proportion of the component (e) used is 0 to 40% by weight and preferably 5 to 30% by weight. If it is in excess of 40% by weight, the proportions of the above components (a) to (d) used are outside the above specified ranges, the object of the present invention cannot be attained.

In a case where the paper coating composition of the present invention is used as a coating composition for gate roll coating, as the other copolymerizable compounds as the component (e) in the above monomer composition, hydroxyalkyl-containing acrylate or methacrylate, such as 2-hydroxyethyl acrylate, 2-hydroxyethyl methacrylate, 3- hydroxypropyl acrylate, 3-hydroxypropyl methacrylate, 2,3,4,5,6-pentahydroxyhexyl acrylate, 2,3,4,5,6-penta- hydroxy methacrylate, 2,3,4,5-tetrahydroxypentyl acrylate, 2,3,4,5-tetrahydroxypenthyl methacrylate, etc.

-12-

can be used. Of these, methyl methacrylate, acrylonitrile, 2-hydroxyethyl acrylate, 2-hydroxyethyl methacrylate, etc. are preferably used.

The monomers of each of the above components (a) to
(e) can be used alone or as mixtures comprising two or more
thereof.

The copolymer latex to be used in the present invention is a multi-stage polymerization copolymer latex
obtained by a multi-stage polymerization method. Specifically, it is obtained by first polymerizing 5 to 40% by
weight, preferably 10 to 35% by weight based on the total
weight of the monomers used of a monomer mixture comprising at least one monomer selected from each of the above
components (a), (b), (d) and (e) to obtain a copolymer
having a glass transition temperature of not more than
50°C, preferably 40°C to -50°C, and then, in the presence
of this copolymer, polymerizing a monomer mixture compris-
sing (c) and the remaining (a), (b), (d) and (e) monomers.
If the amount of the monomers polymerized in the polymerization at the first stage is less than 5% by weight,
adhesion strength drops and the object of the present
invention cannot be attained, while on the other hand if
it is in excess of 40% by weight, polymerization stability
is undesirably poor. Furthermore, if the glass transition

-13-

temperature of the polymer obtained by the polymerization at the first stage is more than 50°C, roll contamination occurs at the step of coating the compostion and coating efficiency is undesirably markedly decreased.

The polymerization of the component (c) and the remaining (a), (b), (d), (e) after the polymerization at the first stage is not limited to a one-stage reaction and may be a multi-stage reaction; that is, the number of polymerizations·after the first stage is not critical. Moreover, the combination, the order of addition and so forth of the above components in polymerization at the second stage or after the second stage are not critical. More specifically, for example, after the polymerization at the first stage, the component (c) may be added and polymerized and then the remaining components (a), (b), (d), (e) may be added to complete polymerization, or the component (c) and the remaining components may be added at the same time and polymerized. Moreover, the monomers used in polymerization at the first stage, or at the second stage or after the second stage may be charged in a reactor at the same time and polymerized, or can be polymerized while introducing, continuously or·intermittently, in the reactor.

The copolymer latex of the present invention can be

-14-

produced by the conventionally known method as long as the above requirements are satisfied. That is, it can be produced by emulsion polymerization using an emulsifying agent, a polymerization initiator, a polymer chain transfer agent and so forth in an aqueous medium.

The glass transition temperature of the copolymer latex of the present invention is preferably in the range of -30°C to +30°C. If a copolymer latex having a glass transition temperature falling within the above range is used, there can be obtained a cardboard having good gloss, strength, wet ink receptivity and post working suitability.

In a case where the paper coating composition of the present invention is used as a coating composition for cardboard, as the pigment binder, the above copolymer latex can be used in combination with a water-soluble binder such as casein, casein modified products, starch, starch modified products, polyvinyl alcohol, carboxymethyl cellulose, and the like. In particular, casein and its modified products are preferred, and if the above copolymer is used in combination with casein and/or its modified products, water retention, adhesion force, and gloss of coated paper are markedly increased. As this casein and/or its modified products, those conventionally

-15-

in general use can be used. The amount of the water-soluble binder added is preferably 1 to 20 parts by weight, more preferably 2 to 15 parts by weight per 100 parts by weight of the pigment.

In a case where the paper coating composition of the present invention is used as a coating composition for cardboard, as the pigment, mineral pigments generally used in paper coating can be used. Typical examples are clay, barium sulfate, titanium oxide, calcium carbonate, satin white, and the like.

The ratio of the pigment to the pigment binder is usually such that the amount of the pigment binder (when a water-soluble binder is used, total amount of the binder and the copolymer latex) is about 5 to 30 parts by weight per 100 parts by weight of the pigment.

To the cardboard coating composition of the present invention can be appropriately compounded various additives generally used, such as an insolubilization increasing agent, an insolubilization accelerating agent, a pigment dispersing agent, a viscosity controlling agent, a coloring pigment, a fluorescent dye and a pH adjusting agent.

In a case where the paper coating composition of the present invention is used as a paper coating composition

-16-

for gate roll coating, the average particle diameter of the copolymer latex to be used as a binder is preferably 500 to 2,500 Å, more preferably 600 to 2,300 Å and particularly preferably 700 to 1,990 Å. If the average particle diameter is in excess of 2500 Å, dry strength drops and the composition is unsuitable for gate roll coating. On the other hand, if it is less than 500 Å, the viscosity of the copolymer latex becomes high, the stability of the coating composition drops, and operating efficiency is decreased. Moreover, the toluene insoluble content of the copolymer is preferably 20 to 95% by weight and more preferably 40 to 90% by weight. If the toluene insoluble content is less than 20% by weight, adhesion strength drops and the stability of the copolymer drops, and thus the gum up phenomenon is liable to occur and operating efficiency is reduced. On the other hand, if it is in excess of 95% by weight, adhesion strength drops.

The average particle diameter and the toluene insoluble content were measured by the following methods.

Average Particle Diameter

A copolymer latex was treated with osmic acid and then observed under an electron microscope, and arithmetic mean of diameters of 500 particles was determined and

-17-

indicated as an average particle diameter.

Toluene Insoluble Content

A copolymer latex was adjusted to pH 8, and a copolymer in the latex was coagulated with isopropanol and then washed and dried to obtain solids. 0.3 g of the solids was dipped in 100 ml of toluene at room temperature for 20 hours and, thereafter, filtered with a 120 mesh metal net. The weight ratio of the residual solids to the all solids was indicated as a toluene insoluble content.

In a case where the paper coating composition of the present invention is used as a coating composition for gate rc..l coating, the stability of the copolymer latex is important. In order to evaluate the stability, a degree of stability was measured by the following method.

Degree of Stability

15 parts by weight (calculated as solids) of a copolymer latex, 80 parts of clay, 20 parts of calcium carbonate and 7 parts of starch were mixed, and the solids concentration was adjusted to 30% by weight by adding thereto water.

100 g of the test solution was weighed in a vessel of a Maron mechanical stability tester according to JIS K6387 and warmed to 70°C using hot water, and the hot

-18-

water was maintained at 70°C. The test solution was stirred under conditions of pressure 2 kg/cm², stirring speed 1,000 rpm, stirring time 10 minutes. Then, the test solution was filtered with a 120 mesh metal net, and the amount of the residue on the metal net was measured. The degree of stability was determined by the following equation.

Degree of Stability (wt%)=

$$\frac{\text{Amount of Residue (g)}}{\text{Total Amount of Solids in Test Stolution before Measurement (g)}}$$

In a case where the paper coating composition of the present invention is used as a paper coating composition for gate roll coating, the degree of stability as determined by the above method is not more than 0.9% by weight and preferably not more than 0.6% by weight. If the degree of stability is in excess of 0.9% by weight, the gum up phenomenon readily occurs and, as a result, a smooth coating layer cannot be obtained and operating efficiency is also reduced.

In a case where the paper coating composition of the present invention is used as a paper coating composition for gate roll coating, the glass transition temperture of the copolymer latex used is preferably in the range of

-19-

-50°C to +40°C. If it is lower than -50°C, the stickness of the copolyer latex becomes high and operating efficiency is reduced. On the other hand, if it is higher than +40°C, adhesion strength undesirably drops.

Emulsion polymerization of the aforementioned monomers (a), (b), (c), (d), (e) can be carried out in an aqueous medium using an emulsifying agent, a polymerization initiator, a molecular weight modifier, and so forth by the known method.

As the emulsifying agent, for example, an amophoteric surfactant, an anionic surfactant, or a nonionic surfactant can be used. As the amphoteric surfactant, those containing a carboxylic acid salt, a sulfuric acid ester salt, a sulfonic acid salt or a phosphoric acid ester salt as the anion portion and an amine salt or a quaternary ammonium salt as the cation portion can be given. More specifically, as the salts of alkylbetaine, the salts of each of laurylbetaine, stearylbetaine, cocoamidopropylbetaine and 2-undecyl-hydroxyethyl-imidazoliumbetaine, and as those of the amino acid type, the salts of each of lauryl-beta($\beta$)-alanine, stearyl-beta-($\beta$)-alanine, lauryldi(aminoethyl)glycine, octyldi-(aminoethyl)glycine and dioctyldi(aminoethyl)glycine can be given. As the anionic surfactant, for example, the

-20-

sulfuric acid esters of higher alcohols, alkylbenzenesulfonic acid salts, aliphatic sulfonic acid salts and the like can be given. As the nonionic surfactant, the usual alkylester type, alkyl ether type, alkylphenyl ether type of polyethylene glycol and the like are used.

As the initiator, any of a water-soluble initiator, such as sodium persulfate, potassium persulfate, ammonium persulfate and the like; an oil-soluble initiator, such as benzoyl peroxide, cumenehydroperoxide, azobisisobutylo-nitrile and the like; or a redox type initiator can be used.

With regard to a molecular weight modifier, a chelating agent, inorganic salts and so forth, those known in emulsion polymerization are used.

The paper coating composition for gate roll coating of the present invention is prepared as an aqueous dispersion from the above copolymer latex in combination with an inorganic pigment or an organic pigment, preferably an inorganic pigment and, if necessary, other binders.

In this case, per 100 parts by weight of the pigment, as calculated as solids, the copolymer latex of the present invention is used in 5 to 40 parts by weight, preferably 9 to 30 parts by weight, and the other binder is used in 0 to 30 parts by weight, preferably 2 to 10 parts by weight.

-21-

If the copolymer latex is less than 5 parts by weight, no sufficient adhesion strength can be obtained. On the other hand, if it is in excess of 40 parts by weight, the viscosity of the coating composition increases and fluidity drops, and thus coating efficiency is reduced.

As the pigment, an inorganic pigment, such as kaolin clay, talc, barium sulfate, titanium oxide (rutile anatase), calcium carbonate, aluminum hydroxide, zinc oxide, satin white and the like, or an organic pigment, such as a polystyrene latex can be used. They are used alone or as mixtures thereof.

As the other binders, a natural binder, such as starch, oxidized starch, soybean protein, casein and the like, or a synthetic latex, such as polyvinyl alcohol, a polyvinyl acetate latex, an acryl latex, a carboxy-modified SB latex, a butadiene-methyl methacrylate and the like is used.

In preparing the paper coating composition for gate roll coating in the present invention, other additives such as a dispersing agent (sodium pyrophosphate, sodium hexametaphosphate and the like), a defoaming agent (polyglycol, fatty acid esters, phosphoric acid esters, silicone oil and the like), a levelling agent (Turkey red oil, dicyanediamide, urea and the like), an anticeptic,

-22-

an insolubilizer (formalin, hexamine, a melamine resin, a urea resin, glyoxal and the like), a releasing agent (calcium stearate, paraffin emulsion and the like), a fluorescent dye, a color water retention increasing agent (carboxymethyl cellulose, sodium alginate and the like) are added if necessary.

The paper coating composition of the present invention is, after being coated, dried in surface and finished by calendering and so forth.

(Example)

The present invention is explained by illustrating examples, although the present invention is not limited to the following examples. In the examples, parts and % showing the proportions mean parts by weight and % by weight, respectively.

Preparation Example 1

(Preparation of Copolymer Latex)

In an autoclave were placed 200 parts by weight of water, 0.5 part of sodium dodecylbenzenesulfonate, 1.5 parts of potassium persulfate, 6 parts of carbon tetrachloride and the first stage components shown in Table 1, and they were reacted at 60°C for 3 hours to obtain a copolymer latex at a polymerization conversion of not less than 98%. Subsequently, the second stage components

- 23-

shown in Table 1 were added, and further reacted for 15 hours to produce Copolymer Latexes (A) to (D) and (a) to (g) at polymerization conversions of at least 98%.

The copolymer latexes (A) to (D) are latexes falling within the scope of the present invention, and (a) to (g) are latexes not falling within the scope of the present invention.

Examples 1 to 4, Comparative Examples 1 to 7

Using the copolymer latexes (A) to (D) and (a) to (g), cardboard paints were prepared according to the following formulation.

Composition

| | |
|---|---|
| Clay | 60 parts |
| Calcium carbonate | 40 parts |
| Copolymer latex (solids) | 15 parts |
| Casein | 6 parts |

Water was added in such an amount that the solids concentration was 60%. This cardboard paint was coated under the conditions shown below to obtain a coated paper.

Method: Rod hand coating

Drying: Gear oven, 120°C, 30 seconds

Calender: Gloss calender, 120°C, 80 kg/cm, 1 pass Base stock: Commercially available cardboard

-24-

$(220 \ g/m^2)$

The coated cardboards thus obtained were measured for characteristics by the following methods.

RI Dry Pick: Measure of Adhesion Strength

The degree of picking when the coated cardboard was printed by the use of an RI printer was determined with the naked eye and rated by the five stage rating method. As the value is higher, the adhesion strength is higher. Indicated as an average value of six tests.

RI Wet Pick: Measure of Insolubility

The degree of picking when damping water was applied by the use of a molton roll of an RI printer was determined with the naked eye and rated by the five stage rating method. As the value is higher, the insolubility is better. Indicated as an average value of six tests.

Gloss of Coated Paper

Measured by the use of a Murakami type glossmeter $(75°-75°)$.

Printing Gloss

A web offset ink was applied by solid printing with an RI printer, and the printing gloss was measured by the use of a Murakami type glossmeter $(75°-75°)$.

Wet Ink Receptivity

The degree of ink transfer when dampling water was

-25-

applied by the use of a molton roll of an RI printer was determined by measuring the ink concentration. As the concentration is higher, the wet ink receptivity is better. Indicated as an average value of six tests.

Blister Pack Suitability

A 1:1 mixture of a blister pack adhesive #11 and L Reducer (both manufactured by Arakawa Toryo Kogyo Co., Ltd.) was coated on each of a coated paper and a printed coated paper in a uniform thickness by the use of a coating rod and dried. On this coating layer was overlaid a hard polyvinyl chloride piece of specified area for blister pack, which were then bonded under pressure at 150°C for 5 seconds by the use of a heat sealer from the back thereof. Polyvinyl chloride sheets provided on total twelve test pieces of six test pieces with the sheet provided on the coated paper side and six test pieces with the sheet provided on the printed coated paper side were peeled apart, and the adhesion strength between the coated surface and the polyvinyl chloride sheet piece in each test piece was determined with the naked eye and rated by the five stage rating method. Blister suitability was indicated as an average value of 12 test pieces. The coated paper side means a surface on which an offset indigo ink was coated by solid printing with an RI printer.

-26-

Gluability

Life Bond (manufactured by Nichiei Kako Co., Ltd.) was coated on the surface of a coated paper by the use of a space in such a manner that the width was 5 mm, the length was 80 mm, the thickness was 0.2 mm. The coated paper was folded in such a manner that the surface coated with Life Bond was in contact with the surface not coated with Life Bond, and a load of 2 kg was applied for 1 minute to bond them together. After removal of the load, the folded paper was allowed to stand for 24 hours under constant conditions of temperature 20°C and humidity 60%. At the end of the time, the coated surface was peeled apart. The state of break-down in the neighborhood of the pressure applied surface was examined with the naked eye and rated by the five stage rating method. The average value of six tests was indicated as gluability.

The evaluation results are shown in Table 2.

The following can be seen from Table 2.

Examples 1 to 4 are examples in which the copolymer latexes of the present invention were used, and the effects aimed at by the present invention could be obtained.

Comparative Example 1 is an example in which as the component (c) was used Copolymer Latex (a) not falling

-27-

within the range of the present invention. In this case, paint viscosity was high and operating efficienty was low. In addition, blister pack suitability, gluability and so forth were poor.

Comparative Example 2 is an example in which as the component (c) was used Copolymer Latex (b) not falling within the range of the present invention. In this case, paint viscosity was markedly high, operating efficiency was low, and the latex was unsuitable for coating.

Comparative Example 3 is an example in which as the component (d) was used Copolymer Latex (c) not falling within the range of the present invention. In this case, the copolymer latex was poor in stability, the color was in a coagulated state, and coating was impossible.

Comparative Example 4 is an example in which as the component (d) was used Copolymer Latex (d) not falling within the range of the present invention. In this case, paint viscosity was markedly high, operating efficiency was low and wet pick was poor.

Comparative Example 5 is an example in which there was used Copolymer Latex (e) wherein the glass transition temperature of the polymer obtained at the first step exceeded the range of the present invention. This copolymer latex was subjected to the stickness test (A copolymer latex film and a polyester film were bonded together, and the separated from each other. The force required for separation was measured, and based on the force, stickness was determined. As the force is higher, the stickness is higher) as a measure of roll contamination at the time of coating. The stickness of this example was larger than that of the present invention. Therefore, coating efficiency was reduced by roll contamination. No evaluatiom was made.

Comparative Example 6 was an example in which there was used Copolymer Latex (f) wherein the monomer proportion at the first step was in excess of the range of the present invention. In this case, polymerization stability at the step of polymerization was seriously low. No evaluation was made.

Comparative Example 7 was an example in which there was used Copolymer Latex (g) obtained by introducing all the polymerization components of Example 1 and reacting at 60°C for 10 hours. At the step of polymerization, a large amount of coagulates were formed. No evaluation was made.

Table 1

Monomer Composition of Copolymer Latex and Composition Charged at Polymerization

| | | Example | | | | Comparative Example | | | | | | |
|---|---|---|---|---|---|---|---|---|---|---|---|---|
| | | 1 | 2 | 3 | 4 | 1 | 2 | 3 | 4 | 5 | 6 | 7 |
| Copolymer Latex No. | | (A) | (B) | (C) | (D) | (a) | (b) | (c) | (d) | (e) | (f) | (g) |
| Monomer Composition Ratio of Copolymer Latex (parts) | | | | | | | | | | | | |
| Component (a) | BD | 37 | 30 | 37 | 30 | 37 | 37 | 37 | 37 | 31 | 37 | 37 |
| Component (b) | ST | 52 | 59 | 41 | 64 | 52 | 43 | 52 | 43 | 66 | 52 | 52 |
| Component (c) | AAM | 3 | 3 | – | 3 | – | 6 | 3 | 3 | 1 | 3 | 3 |
| | MAM | – | – | 5 | – | – | 6 | – | – | – | – | – |
| Component (d) | AA | 1 | 1 | – | 1 | 1 | 1 | – | 6 | – | 1 | 1 |
| | TA | 2 | 2 | – | 1 | 2 | 2 | – | 6 | 2 | 2 | 2 |
| | FA | – | – | 2 | 1 | – | – | – | – | – | – | – |
| Component (e) | MMA | 5 | 5 | 10 | – | 8 | 5 | 8 | 5 | – | 5 | 5 |
| | AN | – | – | 5 | – | – | – | – | – | – | – | – |

Table 1 (conti')

| Proportion of Monomers Charged at Polymerization of Copolymer Latex | Example | | | | Comparative Example | | | | | | |
|---|---|---|---|---|---|---|---|---|---|---|---|
| | 1 | 2 | 3 | 4 | 1 | 2 | 3 | 4 | 5 | 6 | 7 |
| **First Stage Components** | | | | | | | | | | | |
| BD | 8 | 6 | 8 | 8 | 8 | 8 | 8 | 8 | 5 | 17 | 37 |
| ST | 10 | 18 | 10 | 10 | 10 | 11 | 12 | 10 | 21 | 21 | 52 |
| AA | – | – | – | – | – | – | – | 3 | – | – | 1 |
| TA | 2 | 1 | – | 1 | 2 | 1 | – | 3 | 2 | 2 | 2 |
| FA | – | – | 2 | 1 | – | – | – | – | – | – | – |
| MMA | 5 | – | 5 | – | 5 | 5 | 5 | – | – | 5 | 5 |
| AAM | – | – | – | – | – | – | – | – | – | – | 3 |
| **Second Stage Components** | | | | | | | | | | | |
| BD | 29 | 24 | 29 | 22 | 29 | 29 | 29 | 29 | 29 | 20 | – |
| ST | 42 | 41 | 31 | 54 | 47 | 32 | 40 | 33 | 45 | 31 | – |
| AAM | 3 | 3 | – | 3 | – | 6 | 3 | 3 | 1 | 3 | – |
| MAM | – | – | 5 | – | – | 6 | – | – | – | – | – |
| AA | 1 | 1 | – | 1 | 1 | 1 | – | 3 | – | 1 | – |
| TA | – | 1 | – | – | – | 1 | – | 3 | – | – | – |
| FA | – | – | – | – | – | – | – | – | – | – | – |
| MMA | – | 5 | 5 | – | 3 | – | 3 | 5 | – | – | – |
| AN | – | – | 5 | – | – | – | – | – | – | – | – |
| **Glass Gransition Temperature of Polymer at First Stage (°C)** | –2 | +17 | –2 | –20 | –2 | –3 | –3 | –4 | +68 | –15 | –14 |

-31-

Table 1 (conti')

BD: Butadiene

ST: Styrene

AAM: Acrylamide

MAM: Methacrylamide

AA: Acrylic acid

TA: Itaconic acid

FA: Fumaric acid

MMA: Methyl methacrylate

AN: Acrylonitrile

## Table 2
### Evaluation Results of Cardboard Coating Composition

| Physical Properties of Color | Example | | | | Comparative Example | | | |
|---|---|---|---|---|---|---|---|---|
| | 1 | 2 | 3 | 4 | 1 | 2 | 3 | 4 |
| Viscosity (cps) | 1090 | 1100 | 860 | 1100 | 3450 | 7800 | – | 6450 |
| Aggregatation | * | * | * | * | * | * | ** | * |
| **Physical Properties of Coated Paper** | | | | | | | | |
| Dry Pick | 4.5 | 4.0 | 4.5 | 4.0 | 4.0 | 4.5 | – | 4.5 |
| Wet Pick | 4.3 | 4.5 | 4.2 | 4.5 | 4.3 | 4.0 | – | 3.8 |
| Gloss of Coated Paper | 45 | 50 | 45 | 50 | 42 | 46 | – | 46 |
| Printing Gloss | 72 | 73 | 72 | 73 | 69 | 73 | – | 71 |
| Wet Ink Recip-tivity | 0.88 | 0.92 | 0.89 | 0.80 | 0.84 | 0.94 | – | 0.85 |
| Blister Pack Suitability | 4.5 | 4.2 | 4.0 | 4.1 | 3.5 | 4.5 | – | 4.6 |
| Gluability | 4.5 | 4.1 | 4.5 | 4.2 | 3.5 | 4.3 | – | 4.4 |

\* No coagulation occurred.
\*\* Coagulation occurred, and coating could not be effected.

-33-

Preparation Example 2

(Preparation of Copolymer Latexes (M) to (S), (m) to (q))

In an autoclave were placed 200 parts of water, 0.5 part of sodium dodecylbenzenesulfonate, 1.5 parts of potassium persulfate, 6 parts of carbon tetrachloride and the first stage components shown in Table 3, which were then reacted at 60°C for 3 hours to obtain copolymer latexes at a polymerization conversion of 98% or more. Subsequently, the second stage components shown in Table 3 were added and then reacted for 15 hours to produce Copolymer Latexes (M) to (S) and (m) to (q).

The copolymer latexes (M) to (S) are latexes within the scope of the present invention, and (m) to (q) are outside the scope of the present invention.

Examples 5 to 11, Comparative Examples 8 to 12

Using the copolymer latexes (M) to (S) and (m) to (q), light weight coating paints were prepared by the following formulation.

Composition

| | |
|---|---|
| Clay | 80 parts |
| Calcium carbonate | 20 parts |
| Copolymer latex (solids) | 15 parts |
| Starch | 7 parts |

Water was added so that the solids concentration was

-34-

69%. As the stock base, an intermediate quality stock base (64 g/m$^2$) was used.

The coated papers thus obtained were measured for characteristics by the same methods as in Examples 1 to 3. The degree of stability was measured by the same method as described above. The stickness was measured by the following method.

Stickness: Measure of Drum Contamination at Drum Drying

The copolymer latex was coated on a polyester film and dried to form a film. On this film was bonded under pressure a paper, which was then peeled apart, and the degree of paper remaining on the film was determined with the naked eye.

    O : No paper remained.

    △ : A small portion of the paper remained.

    X : The major portion of the paper remained.

The evaluation results are shown in Table 4.

The following can be seen from Table 4.

Examples 5 to 11

These are examples in which the copolymer latexes of the present invention are used, and the effects aimed at by the present invention could be obtained.

Comparative Exmample 8

Comparative Example 8 is an example in which as the

-35-

component (c) was used Copolymer Latex (m) not falling within the range of the present invention, and in which stability was poor, operating efficiency was low and the smoothness of a coating layer was bad.

Comparative Example 9

Comparative Example 9 is an example in which as the component was used Copolymer Latex (n) not falling within the range of the present invention, and in which paint viscosity was high and also stickness was high and, therefore, operating efficiency was low and the composition was unsuitable for gate roll coating.

Comparative Example 10

Comparative Example 10 is an example in which as the component (d) was used Copolymer Latex (o) not falling within the range of the present invention, and in which stability was low and stickness was high and, therefore, operating efficiency was low and dry strength was low.

Comparative Example 11

Comparative Example 11 is an example in which as the component (d) was used Copolymer Latex (p) not falling within the range of the present invention, and in which the viscosity of the paint was high and, therefore, operating efficiency was low and the composition was unsuitable for gate roll coating.

-36-

Comparative Example 12

Comparative Example 12 is an example in which there was used Copolymer Latex (q) the stability of which was not within the range of the present invention, and in which stickness was high, operating efficiency was low and the compostion was unsuitable for gate roll coating.

Table 3
Monomer Composition of Copolymer Latex and Composition Charged at Polymerization

| | | Example | | | | | | | Comparative Example | | | | |
|---|---|---|---|---|---|---|---|---|---|---|---|---|---|
| | | 5 | 6 | 7 | 8 | 9 | 10 | 11 | 8 | 9 | 10 | 11 | 12 |
| Copolymer Latex No. | | (M) | (N) | (O) | (P) | (Q) | (R) | (S) | (m) | (n) | (o) | (p) | (q) |
| Conomer Composition Ratio of Copolymer Latex (parts) | | | | | | | | | | | | | |
| Component (a) | BD | 37 | 30 | 37 | 30 | 45 | 40 | 30 | 37 | 37 | 37 | 37 | 37 |
| Component (b) | ST | 52 | 59 | 41 | 34 | 41 | 35 | 64 | 52 | 43 | 52 | 43 | 51.95 |
| Component (c) | AAM | 3 | 3 | – | – | – | 3 | 3 | – | 6 | 3 | 3 | 0.05 |
| | MAM | – | – | 5 | – | – | 5 | – | – | 6 | – | – | – |
| | NMA | – | – | – | 1 | 2 | – | – | – | – | – | – | – |
| Component (d) | AA | 1 | 1 | – | 1 | 2 | 1 | 1 | 1 | 1 | – | 6 | 1 |
| | TA | 2 | 2 | – | 4 | – | 1 | 1 | 2 | 2 | – | 6 | 2 |
| | FA | – | – | 2 | – | – | – | 1 | – | – | – | – | – |
| Component (e) | MMA | 5 | 5 | 10 | 20 | 10 | 15 | – | 8 | 5 | 8 | 5 | 8 |
| | AN | – | – | 5 | 10 | – | – | – | – | – | – | – | – |

Table 3 (conti')

| | | Example | | | | | | | Comparative Example | | | | |
|---|---|---|---|---|---|---|---|---|---|---|---|---|---|
| | | 5 | 6 | 7 | 8 | 9 | 10 | 11 | 8 | 9 | 10 | 11 | 12 |
| **Proportion of Monomers Charged at Polymerization of Copolymer Latex** | | | | | | | | | | | | | |
| First Stage Components | BD | 8 | 6 | 8 | 6 | 14 | 10 | 6 | 8 | 8 | 8 | 8 | 8 |
| | ST | 10 | 18 | 10 | 18 | 5 | 9 | 18 | 10 | 11 | 12 | 10 | 10 |
| | AA | – | – | – | – | 1 | – | – | – | – | – | 3 | – |
| | TA | 2 | 1 | – | 2 | – | 1 | 1 | 2 | 1 | – | 3 | 2 |
| | FA | – | – | 2 | – | – | – | – | – | – | – | – | – |
| | MMA | 5 | – | 5 | – | 5 | 5 | – | 5 | 5 | 5 | – | 5 |
| | AAM | – | – | – | – | – | – | – | – | – | – | – | – |
| Second Stage Components | BD | 29 | 24 | 29 | 24 | 31 | 30 | 24 | 29 | 29 | 29 | 29 | 29 |
| | ST | 42 | 41 | 31 | 16 | 36 | 26 | 46 | 42 | 32 | 40 | 33 | 41.95 |
| | AAM | 3 | 3 | – | – | 2 | 3 | 3 | – | 6 | 3 | 3 | 0.05 |
| | MAM | – | – | 5 | – | – | 5 | – | – | 6 | – | – | – |
| | NMA | – | – | – | 1 | – | – | – | – | – | – | – | – |
| | AA | 1 | 1 | – | 1 | 1 | 1 | 1 | 1 | 1 | – | 3 | 1 |
| | TA | – | 1 | – | 2 | – | – | – | – | 1 | – | 3 | – |
| | FA | – | – | – | – | – | – | 1 | – | – | – | – | – |
| | MMA | – | 5 | 5 | 20 | 5 | 10 | – | 3 | – | 3 | 5 | 3 |
| | AN | – | – | 5 | 10 | – | – | – | – | – | – | – | – |
| **Glass Gransition Temperature of Polymer at First Stage (°C)** | | -2 | +17 | -2 | +20 | -49 | -20 | +17 | -2 | -3 | -3 | -4 | -2 |
| **Toluene Insoluble Content (%)** | | 60 | 60 | 60 | 70 | 70 | 70 | 60 | 70 | 60 | 90 | 70 | 80 |
| **Average Particle Diameter (Å)** | | 1700 | 1800 | 1700 | 1700 | 1700 | 1700 | 1800 | 1700 | 1700 | 1800 | 1700 | 1700 |

-39-

Table 3 (conti')

BD: Butadiene

ST: Styrene

AAM: Acrylamide

MAM: Methacrylamide

NMA: N-methylolacrylamide

AA: Acrylic acid

TA: Itaconic acid

FA: Fumaric acid

MMA: Methyl methacrylate

AN: Acrylonitrile

## Table 4

### Evaluation Results of Coating Composition

| | Example | | | | | | | Comparative Example | | | | |
|---|---|---|---|---|---|---|---|---|---|---|---|---|
| | 5 | 6 | 7 | 8 | 9 | 10 | 11 | 8 | 9 | 10 | 11 | 12 |
| Stickness | O | O | O | O | O | O | O | X | O | Δ | Δ | X |
| Stability (%) | 0.020 | 0.015 | 0.001 | 0.010 | 0.022 | 0.024 | 0.020 | 1.234 | 0.001 | 1.201 | 0.006 | 1.124 |
| Viscosity (cps) | 1120 | 1450 | 1030 | 1200 | 1060 | 1610 | 1480 | 1090 | 4600 | 1110 | 6400 | 1080 |
| Physical Properties of Coated Paper | | | | | | | | | | | | |
| Dry Pick | 4.9 | 4.0 | 4.0 | 4.1 | 4.9 | 4.0 | 4.0 | 4.8 | 3.9 | 3.0 | 4.2 | 3.9 |
| Wet Pick | 4.5 | 4.9 | 4.4 | 4.5 | 4.4 | 4.5 | 5.0 | 4.4 | 4.0 | 3.4 | 4.4 | 4.0 |
| Gloss of Coated Paper | 54 | 56 | 58 | 59 | 60 | 53 | 57 | 54 | 52 | 51 | 50 | 55 |
| Printing Gloss | 86 | 85 | 87 | 88 | 87 | 86 | 65 | 81 | 80 | 82 | 82 | 86 |

-41-

Comparative Example 1 is directed to a cardboard composition in which a commonly used carboxylated styrene-butadiene rubber latex is used as a binder. The coating composition of the present invention, when used as a cardboard coating composition, has advantages as described below over the composition of Comparative Example 1.

(1) The viscosity is low. Thus it is possible to prepare a cardboard paint which is excellent in operating efficiency at the time of coating and has a solid concentration of at least 60% which has heretofore been considered difficult to obtain.

(2) The balance among physical properties of coated paper, such as dry pick, gloss of coated paper, printing gloss and so forth, is excellent.

(3) Post working performance such as blister pack suitability and gluability which are the important characteristics for cardboard is excellent.

In addition, there can be obtained advantages associated with the aforementioned effects.

(4) Since high concentration coating is possible, a reduction in cost due to the saving of drying energy can be attained, which is advantageous from an industrial standpoint.

-42-

(5) Since coating efficiency is excellent, production costs are decreased.

(6) Since the performance of cardboard is improved, it is possible to extend the field of application of cardboard.

Furthermore, the coating composition of the present invention, when used as a paper coating composition for gate roll coating, has the following advantages.

(1) Mechanical stability is excellent. Thus the operating efficiency at the time of gate roll coating is excellent and it is possible to perform coating at a gate roll coating speed of at least 600 m/min which has been heretofore been considered difficult to perform on a industrial scale.

(2) The balance among physical properties such as dry pick, printing gloss and so forth is excellent.

(3) Since stickness is low, the contamination of a cylinder dryer for dyring after coating is reduced and cutting properties are excellent.

(4) Since high-speed coating is possible and cutting properties are excellent, production costs are decreased.

Industrial Applicability

As described above, the paper coating composition of the present invention is of greatly high industrial value

0304489

-43-

as a cardboard coating composition and also as a coating composition for gate roll coating.

0304489

-44-

Claims

1.    A paper coating composition comprising a pigment and a binder, characterized in that as the binder the following copolymer latex is used.

Copolymer Latex

(a) Aliphatic conjugated diene 20 to 60% by weight

(b) Aromatic vinyl compound 10 to 65% by weight

(c) Amide-based vinyl monomer 0.1 to 10% by weight

(d) Ethylenically unsaturated carboxylic acid 0.5 to 10% by weight

(e) Other copolymeizable compound 0 to 40% by weight

Multi-stage polymerization copolymer latex obtained by first emulsion polymerizing 5 to 40% by weight based on the total weight of the monomers used of a monomer mixture comprising at least one monomer selected from each of (a), (b), (d) and (e) above to form a copolymer having a glass transition temperaure of not more than 50°C and then, in the presence of the above copolymer, emulsion polymerizing a monomer mixture comprising (c) and the remaining (a), (b), (d), (e) monomers.

2.     The composition as claimed in Claim 1 wherein when it is used in coating of cardboard, a copolymer latex prepared from the monomer composition shown below is used as the binder.

Monomer Composition

    (a) Aliphatic conjugated diene 20 to 60% by weight

    (b) Aromatic vinyl compound 10 to 65% by weight

    (c) Amide-based vinyl monomer 0.1 to 10% by weight

    (d) Ethylenically unsaturated carboxylic acid 0.5 to 10% by weight

    (e) Other copolymerizable compound 0 to 40% by weight

3.     The composition as claimed in Claim 1 wherein when it is used in gate roll coating, a copolymer latex prepared from the monomer composition shown below is used as the binder, and the degree of stability as determined according to JIS K6387 is not more than 0.9% by weight.

Monomer Composition

    (a) Aliphatic conjugated diene 20 to 60% by weight

    (b) Aromatic vinyl compound

-46-

                        10 to 65% by weight

(c) Amide-based vinyl monomer 0.1 to 10% by weight

(d) Ethylenically unsaturated carboxylic acid 0.5 to 10% by weight

(e) Other copolymerizable compound 0 to 40% by weight

# INTERNATIONAL SEARCH REPORT

0304489

International Application No  PCT/JP87/00955

## I. CLASSIFICATION OF SUBJECT MATTER (if several classification symbols apply, indicate all) [3]

According to International Patent Classification (IPC) or to both National Classification and IPC

Int.Cl[4]  D21H1/28, 1/34

## II. FIELDS SEARCHED

| Minimum Documentation Searched [4] | |
|---|---|
| Classification System | Classification Symbols |
| IPC | D21H1/28, 1/34 |

Documentation Searched other than Minimum Documentation
to the Extent that such Documents are Included in the Fields Searched [5]

| | |
|---|---|
| Jitsuyo Shinan Koho | 1912 – 1987 |
| Kokai Jitsuyo Shinan Koho | 1971 – 1987 |

## III. DOCUMENTS CONSIDERED TO BE RELEVANT [14]

| Category [*] | Citation of Document, [16] with indication, where appropriate, of the relevant passages [17] | Relevant to Claim No. [18] |
|---|---|---|
| Y | JP, A, 61-275497 (Kanzaki Paper Mfg. Co., Ltd.) 5 December 1986 (05. 12. 86) (Family: none) | 1-3 |
| Y | JP, A, 61-207694 (Nippon Zeon Co., Ltd.) 16 September 1986 (16. 09. 86) (Family: none) | 1-3 |
| A | JP, A, 58-91707 (Dainippon Ink and Chemicals, Inc.) 31 May 1983 (31. 05. 83) (Family: none) | 1-3 |
| A | JP, A, 57-191393 (Polymer Limited) 25 November 1982 (25. 11. 82) (Family: none) | 1-3 |

* Special categories of cited documents: [16]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| March 7, 1988 (07.03.88) | March 14, 1988 (14.03.88) |
| International Searching Authority [1] | Signature of Authorized Officer [20] |
| Japanese Patent Office | |

Form PCT/ISA/210 (second sheet) (October 1977)